# EUROPÄISCHE PATENTANMELDUNG

(11) **EP 1 371 657 A1**
(43) Veröffentlichungstag der Anmeldung: **17.12.2003**
(21) Anmeldenummer: 03010097.8
(22) Anmeldetag: 05.05.2003
(51) Int. Cl.: C07F 15/00

(54) **Übergangsmetall-Komplexe und deren Einsatz in Übergangsmetallkatalysierten Reaktionen**

(30) Priorität: 17.05.2002 DE 10222551
(71) Anmelder: Bayer Aktiengesellschaft, 51368 Leverkusen (DE)
(72) Erfinder: Blechert, Siegfried, Prof. Dr., 13503 Berlin (DE)

(57) **Zusammenfassung**

Die Erfindung betrifft neue Übergangsmetallkomplexe der Formel (I)

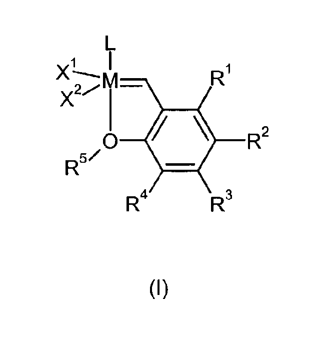

Verfahren zur Herstellung dieser Übergangsmetallkomplexe, Zwischenprodukte zur Herstellung, sowie die Verwendung der Übergangsmetallkomplexe als Katalysatoren in organischen Reaktionen, besonders in Metathesereaktionen.

## Beschreibung

Die Erfindung betrifft neue Übergangsmetallkomplexe der Formel (I), Verfahren zur Herstellung dieser Übergangsmetallkomplexe, Zwischenprodukte zur Herstellung, sowie die Verwendung der Übergangsmetallkomplexe als Katalysatoren in organischen Reaktionen, besonders in Metathesereaktionen.

Die Olefin-Metathese stellt eine wichtige Synthesemethode zur Knüpfung von C-C-Bindungen dar, da mittels dieser Reaktion nebenproduktfrei Olefine synthetisiert werden können. Dieser Vorteil wird sowohl auf dem Gebiet der präparativen organischen Chemie (Ringschluss-Metathese (RCM), Ethenolyse, Metathese acyclischer Olefine, Kreuzmetathese (CM)) als auch auf dem Gebiet der Polymerchemie (Ring-öffnende Metathese-Polymerisationen (ROMP), Alkinpolymerisation, acyclische Dien-Metathese-Polymerisation (ADMET)) genutzt.

Für die Olefin-Metathese stehen eine Vielzahl an Katalysatorsystemen zur Verfügung. So werden in WO 99/51344 A1, WO 00/15339 A1 und WO 00/71554 A2 Übergangsmetallkomplexe beschrieben, welche vorzugsweise Liganden aus der Reihe Imidazol-2-yliden, Dihydroimidazol-2-yliden und Phosphan tragen. Die genannten Übergangsmetallkomplexe werden als Katalysatoren in der Olefin-Metathese eingesetzt. Nachteilig bei den in den oben genannten Literaturstellen beschriebenen Katalysatoren ist ihre geringe Stabilität, die sich in sehr kurzen Katalysatorstandzeiten äußert, welche insbesondere für industrielle Anwendungen von großem Nachteil sind. Nach hohen Anfangsaktivitäten sinkt die Katalysatoraktivität rapide ab. Die Katalysatoraktivität dieser Katalysatoren ist zudem stark substratabhängig.

In Hoveyda et al, *J. Am. Chem. Soc.* **1999,** 791-799 sind Rutheniumkomplexe beschrieben, welche neben einem Phosphan-Liganden einen Alkoxybenzyliden-Liganden aufweisen und sich durch höhere Stabilität im Vergleich zu den bis dahin bekannten Systemen auszeichnen. Einer der beschriebenen Komplexe eignet sich als wiederverwertbarer Katalysator in Metathesereaktionen.

In Gessler et al., *Tetrahedron Lett. 41,* **2000,** 9973-9976 und in Garber et al., *J. Am. Chem. Soc. 122*, **2000,** 8168-8179 sind Rutheniumkomplexe beschrieben, welche neben einem Dihydroimidazol-2-yliden-Liganden einen Isopropoxybenzyliden-Liganden aufweisen. Die genannten Rutheniumkomplexe werden als Katalysatoren in Metathesereaktionen eingesetzt, sie lassen sich, wie für die vorangehend beschriebene Verbindung erwähnt, aus der Reaktionsmischung abtrennen und sind in einer weiteren Metathesereaktion erneut einsetzbar. Nachteilig an diesen wiederverwendbaren Katalysatorsystemen sind die im Vergleich zu den bis dahin bekannten Systemen nur mäßigen Aktivitäten.

In der noch nicht veröffentlichten deutschen Patentschrift mit dem Aktenzeichen 10137051 werden Komplexe der 8. Nebengruppe beschrieben, welche neben einem Dihydroimidazol-2-yliden- oder einem Imidazol-2-yliden-Liganden einen substituierten Isopropoxybenzyliden-Liganden aufweisen. Die genannten Übergangsmetallkomplexe der Gruppe 8 werden ebenfalls als Katalysatoren in Metathesereaktionen eingesetzt werden, wobei sie im Vergleich zu den bis dahin bekannten Systemen erhöhte Aktivität sowie erhöhte Stabilität besitzen. In der WO 02/14376 A2 werden insbesondere dendrimere Rutheniumkomplexe mit vorangehend aufgeführten Liganden beschrieben, welche in Katalysereaktionen besser von den Reaktionsprodukten abzutrennen sind.

Daher bestand Bedarf an neuen Katalysatorsystemen für die Olefin-Metathese, welche stabil und luftstabil sind und zudem hohe Aktivitäten zeigen, die alternativ zu den bereits bekannten Katalysatoren verwendet werden können.

Überraschenderweise wurden nun Verbindungen der Formeln (I) gefunden, 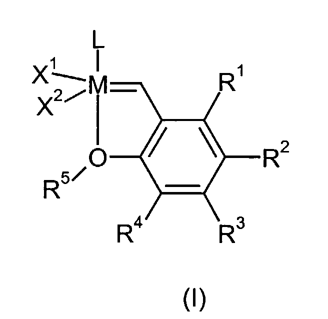 worin
- M: für ein Übergangsmetall der 8. Nebengruppe des Periodensystems steht,
- X¹ und X²: gleich oder verschieden sind und für einen anionischen Liganden stehen,
- R¹, R², R³ und R⁴: gleich oder verschieden sind und für Wasserstoff stehen, mit der Maßgabe, dass mindestens ein Rest R¹ bis R⁴ von Wasserstoff verschieden ist, oder für cyclische, geradkettige oder verzweigte Alkylreste mit 1 bis 50 Kohlenstoffatomen oder für Arylreste mit 6 bis 30 Kohlenstoffatomen stehen, wobei in den genannten Resten gegebenenfalls mindestens ein Wasserstoffatom durch eine Alkylgruppe oder eine funktionelle Gruppe ersetzt ist, und mindestens einer der Reste R¹ bis R⁴ für Halogen, C₁-C₄-Halogenalkyl, C₁-C₄-Alkoxy, C₆-C₁₀-Aryloxy, Cyano, C₁-C₄-Alkoxycarbonyl, C₆-C₁₀-Aryloxycarbonyl oder für aliphatisches oder aromatisches C₁-C₁₀-Acyloxy steht, und/oder
- R¹ und R² oder R² und R³ oder R³ und R⁴ oder R⁴ und R⁵: Teil eines cyclischen Systems sind, welches aus einem Kohlenstoffgerüst mit 3 bis 20 Kohlenstoffatomen besteht, wobei die Kohlenstoffatome in Formel (I) nicht mit eingerechnet werden und wobei gegebenenfalls mindestens ein Wasserstoffatom durch eine Alkylgruppe oder eine funktionelle Gruppen ersetzt ist und/oder gegebenenfalls mindestens ein Kohlenstoffatom des Cyclus durch ein Heteroatom aus der Reihe S, P, O und N ersetzt ist, und
- R⁵: für Wasserstoff oder für cyclische, geradkettige oder verzweigte Alkylreste mit 1 bis 20 Kohlenstoffatomen oder für Arylreste mit 6 bis 20 Kohlenstoffatomen steht, wobei in den genannten Resten gegebenenfalls mindestens ein Wasserstoffatom durch eine Alkylgruppe oder eine funktionelle Gruppe ersetzt ist , wobei R² und R³ nicht Teil eines cyclischen, aromatischen Systems mit 4 Kohlenstoffatomen sein dürfen, die Kohlenstoffatome in Formel (I) nicht mit eingerechnet, wenn R⁵ gleichzeitig für Methyl steht, und
- L: für neutrale Zweielektronen-Donoren aus der Reihe Amine, Imine, Phosphane, Phosphite, Stibine, Arsine, CO, Carbonylverbindungen, Nitrile, Alkohole, Thiole, Ether und Thioether steht.

Vorzugsweise handelt es sich bei den oben genannten funktionellen Gruppen um Reste aus der Reihe Halogen, C₁-C₄-Halogenalkyl, C₁-C₄-Alkoxy, C₁-C₆-Aryloxy, Cyano, C₁-C₄-Alkoxycarbonyl, C₁-C₆-Aryloxycarbonyl, aliphatisches oder aromatisches C₁-C₆-Acyloxy und Sulfonsäuregruppen.

Bevorzugte Bereiche der in den oben aufgeführten Formeln vorhandenen Reste werden im Folgenden definiert:
- M: steht bevorzugt für Ruthenium oder Osmium.
- X¹ und X²: sind gleich oder verschieden und stehen bevorzugt für einen anionischen Liganden aus der Reihe Halogenide, Pseudohalogenide, Hydroxide, Alkoxide, Carboxylate, Sulfonate, wobei die Pseudohalogenide vorzugsweise Cyanid, Rhodanid, Cyanat, Isocyanat, Thiocyanat und Isothiocyanat sind.
- R¹, R², R³ und R⁴: sind gleich oder verschieden und stehen bevorzugt für Wasserstoff, mit der Maßgabe, dass mindestens ein Rest R¹ bis R⁴ von Wasserstoff verschieden ist, oder für cyclische, geradkettige oder verzweigte Alkylreste mit 1 bis 20 Kohlenstoffatomen oder für Arylreste mit 6 bis 20 Kohlenstoffatomen, wobei in den genannten Alkyl- oder Arylresten gegebenenfalls mindestens ein Wasserstoffatom durch eine Alkylgruppe oder eine funktionelle Gruppe ersetzt ist, und mindestens einer der Reste R¹ bis R⁴ steht bevorzugt für Halogen, C₁-C₄-Halogenalkyl, C₁-C₄-Alkoxy, C₆-C₁₀-Aryloxy, Cyano, C₁-C₄-Alkoxycarbonyl, C₆-C₁₀-Aryloxycarbonyl oder für aliphatisches oder aromatisches C₁-C₁₀-Acyloxy, oder
- R¹, R² und R³: stehen bevorzugt für Wasserstoff und R⁴ steht bevorzugt für einen cyclischen, geradkettigen oder verzweigten Alkylrest mit 1 bis 20 Kohlenstoffatomen oder einen Arylrest mit 6 bis 20 Kohlenstoffatomen, wobei in den genannten Resten gegebenenfalls mindestens ein Wasserstoffatom durch eine Alkylgruppe oder eine funktionelle Gruppe ersetzt ist, oder für Halogen, C₁-C₄-Alkoxy, C₁-C₄-Halogenalkyl, C₆-C₁₀-Aryloxy, Cyano, C₁-C₄-Alkoxycarbonyl, C₆-C₁₀-Aryloxycarbonyl oder für aliphatisches oder aromatisches C₁-C₁₀-Acyloxy, oder
- R², R³ und R⁴: stehen bevorzugt für Wasserstoff und R¹ steht bevorzugt für einen cyclischen, geradkettigen oder verzweigten Alkylrest mit 1 bis 20 Kohlenstoffatomen oder einen Arylrest mit 6 bis 20 Kohlenstoffatomen, wobei in den genannten Resten gegebenenfalls mindestens ein Wasserstoffatom durch eine Alkylgruppe oder eine funktionelle Gruppe ersetzt ist, oder für Halogen, C₁-C₄-Halogenalkyl, C₁-C₄-Alkoxy, C₆-C₁₀-Aryloxy, Cyano, C₁-C₄-Alkoxycarbonyl, C₆-C₁₀-Aryloxycarbonyl oder für aliphatisches oder aromatisches C₁-C₁₀-Acyloxy, oder
- R¹, R³ und R⁴: stehen bevorzugt für Wasserstoff und R² steht bevorzugt für einen cyclischen, geradkettigen oder verzweigten Alkylrest mit 1 bis 20 Kohlenstoffatomen oder einen Arylrest mit 6 bis 20 Kohlenstoffatomen, wobei in den genannten Resten gegebenenfalls mindestens ein Wasserstoffatom durch eine Alkylgruppe oder eine funktionelle Gruppe ersetzt ist, oder für Halogen, C₁-C₄-Halogenalkyl, C₁-C₄-Alkoxy, C₆-C₁₀-Aryloxy, Cyano, C₁-C₄-Alkoxycarbonyl, C₆-C₁₀-Aryloxycarbonyl oder für aliphatisches oder aromatisches C₁-C₁₀-Acyloxy, oder
- R¹, R² und R⁴: stehen bevorzugt für Wasserstoff und R³ steht bevorzugt für einen cyclischen, geradkettigen oder verzweigten Alkylrest mit 1 bis 20 Kohlenstoffatomen oder einen Arylrest mit 6 bis 20 Kohlenstoffatomen, wobei in den genannten Resten gegebenenfalls mindestens ein Wasserstoffatom durch eine Alkylgruppe oder eine funktionelle Gruppe ersetzt ist, oder für Halogen, C₁-C₄-Halogenalkyl, C₁-C₄-Alkoxy, C₆-C₁₀-Aryloxy, Cyano, C₁-C₄-Alkoxycarbonyl, C₆-C₁₀-Aryloxycarbonyl oder für aliphatisches oder aromatisches C₁-C₁₀-Acyloxy, oder
- R¹ und R⁴: sind gleich oder verschieden und stehen bevorzugt für Wasserstoff oder einen Arylrest mit 6 bis 20 Kohlenstoffatomen, wobei im Arylrest gegebenenfalls mindestens ein Wasserstoffatom durch eine Alkylgruppe oder eine funktionelle Gruppe ersetzt ist, oder für Halogen, C₁-C₄-Halogenalkyl, C₁-C₄-Alkoxy, C₆-C₁₀-Aryloxy, Cyano, C₁-C₄-Alkoxycarbonyl, C₆-C₁₀-Aryloxycarbonyl oder für aliphatisches oder aromatisches C₁-C₁₀-Acyloxy und R² und R³ sind Teil eines cylischen aromatischen Systems mit 4 bis 14 Kohlenstoffatomen, wobei die Kohlenstoffatome in Formel (I) nicht mit eingerechnet werden und wobei gegebenenfalls mindestens ein Wasserstoffatom durch eine Alkylgruppe oder eine funktionelle Gruppe ersetzt ist, oder
- R¹ und R²: sind gleich oder verschieden und stehen bevorzugt für Wasserstoff oder einen Arylrest mit 6 bis 20 Kohlenstoffatomen, wobei im Arylrest gegebenenfalls mindestens ein Wasserstoffatom durch eine Alkylgruppe oder eine funktionelle Gruppe ersetzt ist, oder für Halogen, C₁-C₄-Halogenalkyl, C₁-C₄-Alkoxy, C₆-C₁₀-Aryloxy, Cyano, C₁-C₄-Alkoxycarbonyl, C₆-C₁₀-Aryloxycarbonyl oder für aliphatisches oder aromatisches C₁-C₁₀-Acyloxy und R³ und R⁴ sind Teil eines cylischen aromatischen Systems mit 4 bis 14 Kohlenstoffatomen, wobei die Kohlenstoffatome in Formel (I) nicht mit eingerechnet werden und wobei gegebenenfalls mindestens ein Wasserstoffatom durch eine Alkylgruppe oder eine funktionelle Gruppe ersetzt ist.
- R⁵: steht bevorzugt für einen geradkettigen oder verzweigten Alkylrest mit 1 bis 20 Kohlenstoffatomen, wobei R² und R³ nicht Teil eines cyclischen, aromatischen Systems mit 4 Kohlenstoffatomen sein dürfen, die Kohlenstoffatome in Formel (I) nicht mit eingerechnet, wenn R⁵ gleichzeitig für Methyl steht,
und L die oben genannte Bedeutung haben kann.
- L: steht bevorzugt für Phosphanliganden PR⁷R⁸R⁹, mit der Maßgabe, dass R⁷, R⁸, R⁹ gleich oder verschieden sein können und für cyclische, geradkettige oder verzweigte Alkylreste mit 1-10 Kohlenstoffatomen oder für Arylreste mit 6 bis 14 Kohlenstoffatomen stehen, wobei in den genannten Alkyl- oder Arylresten gegebenenfalls mindestens ein Wasserstoffatom ersetzt ist durch eine Alkylgruppe oder eine funktionelle Gruppe.
- M: steht besonders bevorzugt für Ruthenium.
- X¹ und X²: sind besonders bevorzugt gleich und stehen für einen anionischen Liganden aus der Reihe Halogenide und Pseudohalogenide, wobei die Pseudohalogenide vorzugsweise Cyanid, Rhodanid, Cyanat und Isocyanat sind.
- R¹, R², R³ und R⁴: sind gleich oder verschieden und stehen besonders bevorzugt für Wasserstoff, mit der Maßgabe, dass mindestens ein Rest R¹ bis R⁴ von Wasserstoff verschieden ist, oder für cyclische, geradkettige oder verzweigte Alkylreste mit 1 bis 10 Kohlenstoffatomen oder für Arylreste mit 6 bis 14 Kohlenstoffatomen, wobei in den genannten Alkyl- oder Arylresten gegebenenfalls mindestens ein Wasserstoffatom durch eine Alkylgruppe oder eine funktionelle Gruppe ersetzt ist, und mindestens einer der Reste R¹ bis R⁴ steht besonders bevorzugt für Halogen, C₁-C₄-Halogenalkyl, C₁-C₄-Alkoxy, C₆-C₁₀-Aryloxy, Cyano, C₁-C₄-Alkoxycarbonyl, C₆-C₁₀-Aryloxycarbonyl oder für aliphatisches oder aromatisches C₁-C₁₀-Acyloxy, oder
- R¹, R² und R³: stehen besonders bevorzugt für Wasserstoff und R⁴ steht besonders bevorzugt für einen Arylrest mit 6 bis 14 Kohlenstoffatomen, wobei gegebenenfalls mindestens ein Wasserstoffatom im Arylrest durch eine Alkylgruppe oder eine funktionelle Gruppe ersetzt ist, oder für Halogen, C₁-C₄-Halogenalkyl, C₁-C₄-Alkoxy, C₆-C₁₀-Aryloxy, Cyano, C₁-C₄-Alkoxycarbonyl, C₆-C₁₀-Aryloxycarbonyl oder für aliphatisches oder aromatisches C₁-C₁₀-Acyloxy, oder
- R¹: steht besonders bevorzugt für Wasserstoff oder für Halogen, C₁-C₄-Halogenalkyl, C₁-C₄-Alkoxy, C₆-C₁₀-Aryloxy, Cyano, C₁-C₄-Alkoxycarbonyl, C₆-C₁₀-Aryloxycarbonyl oder für aliphatisches oder aromatisches C₁-C₁₀-Acyloxy und R⁴ steht besonders bevorzugt für Wasserstoff oder einen Arylrest mit 6 bis 14 Kohlenstoffatomen, wobei gegebenenfalls mindestens ein Wasserstoffatom im Arylrest durch eine Alkylgruppe oder eine funktionelle Gruppe ersetzt ist, vorzugsweise durch C₁-C₄-Alkyl oder C₁-C₄-Alkoxy, oder für Halogen, C₁-C₄-Halogenalkyl, C₁-C₄-Alkoxy, C₆-C₁₀-Aryloxy, Cyano, C₁-C₄-Alkoxycarbonyl, C₆-C₁₀-Aryloxycarbonyl oder für aliphatisches oder aromatisches C₁-C₁₀-Acyloxy und R² und R³ sind Teil eines cylischen aromatischen Systems mit 4 bis 8 Kohlenstoffatomen, wobei die Kohlenstoffatome in Formel (I) nicht mit eingerechnet werden und wobei gegebenenfalls mindestens ein Wasserstoffatom durch eine Alkylgruppe oder eine funktionelle Gruppe ersetzt ist, oder
- R¹: steht besonders bevorzugt für Wasserstoff oder für Halogen, C₁-C₄-Halogenalkyl, C₁-C₄-Alkoxy, C₆-C₁₀-Aryloxy, Cyano, C₁-C₄-Alkoxycarbonyl, C₆-C₁₀-Aryloxycarbonyl oder für aliphatisches oder aromatisches C₁-C₁₀-Acyloxy und R² steht besonders bevorzugt für Wasserstoff oder einen Arylrest mit 6 bis 14 Kohlenstoffatomen, wobei gegebenenfalls mindestens ein Wasserstoffatom im Arylrest durch eine Alkylgruppe oder eine funktionelle Gruppe ersetzt ist, vorzugsweise durch C₁-C₄-Alkyl oder C₁-C₄-Alkoxy, oder für Halogen, C₁-C₄-Halogenalkyl, C₁-C₄-Alkoxy, C₆-C₁₀-Aryloxy, Cyano, C₁-C₄-Alkoxycarbonyl, C₆-C₁₀-Aryloxycarbonyl oder für aliphatisches oder aromatisches C₁-C₁₀-Acyloxy und R³ und R⁴ sind Teil eines cylischen aromatischen Systems mit 4 bis 8 Kohlenstoffatomen, wobei die Kohlenstoffatome in Formel (I) nicht mit eingerechnet werden und wobei gegebenenfalls mindestens ein Wasserstoffatom durch eine Alkylgruppe oder eine funktionelle Gruppe ersetzt ist.
- R⁵: steht besonders bevorzugt für einen verzweigten Alkylrest mit 3 bis 8 Kohlenstoffatomen.
- L: steht besonders bevorzugt für Phosphane PR⁷R⁸R⁹, mit der Maßgabe dass R⁷, R⁸ und R⁹ gleich sind und für cyclische, geradkettige oder verzweigte Alkylreste mit 1-10 Kohlenstoffatomen oder für Arylreste mit 6 bis 14 Kohlenstoffatomen stehen, wobei in den genannten Alkyl- oder Arylresten gegebenenfalls mindestens ein Wasserstoffatom ersetzt ist durch eine Alkylgruppe oder eine funktionelle Gruppe.
- M: steht ganz besonders bevorzugt für Ruthenium.
- X¹ und X²: sind ganz besonders bevorzugt gleich und stehen für ein Halogenid, vorzugsweise für Chlorid.
- R² und R³: sind ganz besonders bevorzugt gleich und stehen für Wasserstoff und R¹ steht für Wasserstoff oder für einen Rest aus der Reihe F, Cl, Br, Trifluormethyl, Methoxy, Ethoxy, Isopropoxy, tert.-Butoxy, Phenoxy, Cyano, Methoxycarbonyl, Ethoxycarbonyl, tert.-Butoxycarbonyl, Acetoxy, Propionyloxy und Pivaloyloxy und R⁴ steht für Phenyl oder Naphthyl, wobei gegebenenfalls mindestens ein Wasserstoff durch eine Alkylgruppe oder eine funktionelle Gruppe ersetzt ist, vorzugsweise durch C₁-C₄-Alkyl oder C₁-C₄-Alkoxy, oder für einen Rest aus der Reihe F, Cl, Br, Trifluormethyl, Methoxy, Ethoxy, Isopropoxy, tert.-Butoxy, Phenoxy, Cyano, Methoxycarbonyl, Ethoxycarbonyl, tert.-Butoxycarbonyl, Acetoxy, Propionyloxy und Pivaloyloxy, oder
- R¹, R² und R³: stehen ganz besonders bevorzugt für Wasserstoff und R⁴ steht ganz besonders bevorzugt für einen Phenyl- oder Naphthylrest, wobei gegebenenfalls mindestens ein Wasserstoffatom durch eine Alkylgruppe oder eine funktionelle Gruppe ersetzt ist, vorzugsweise durch C₁-C₄-Alkyl oder C₁-C₄-Alkoxy, oder für einen Rest aus der Reihe F, Cl, Br, Triflourmethyl, Methoxy, Ethoxy, Isopropoxy, tert.-Butoxy, Phenoxy, Cyano, Methoxycarbonyl, Ethoxycarbonyl, tert.-Butoxycarbonyl, Acetoxy, Propionyloxy und Pivaloyloxy, oder
- R¹, R² und R⁴: stehen ganz besonders bevorzugt für Wasserstoff und R³ steht ganz besonders bevorzugt für einen Rest aus der Reihe F, Cl, Br, Trifluormethyl Methoxy, Ethoxy, Isopropoxy, tert.-Butoxy, Phenoxy, Cyano, Methoxycarbonyl, Ethoxycarbonyl, tert.-Butoxycarbonyl, Acetoxy, Propionyloxy und Pivaloyloxy, oder
- R¹, R³ und R⁴: stehen ganz besonders bevorzugt für Wasserstoff und R² steht ganz besonders bevorzugt für einen Rest aus der Reihe F, Cl, Br, Trifluormethyl Methoxy, Ethoxy, Isopropoxy, tert.-Butoxy, Phenoxy, Cyano, Methoxycarbonyl, Ethoxycarbonyl, tert.-Butoxycarbonyl, Acetoxy, Propionyloxy und Pivaloyloxy, oder
- R², R³ und R⁴: stehen ganz besonders bevorzugt für Wasserstoff und R¹ steht ganz besonders bevorzugt für einen Rest aus der Reihe F, Cl, Br, Trifluormethyl, Methoxy, Ethoxy, Isopropoxy, tert.-Butoxy, Phenoxy, Cyano, Methoxycarbonyl, Ethoxycarbonyl, tert.-Butoxycarbonyl, Acetoxy, Propionyloxy und Pivaloyloxy, oder
- R¹: steht ganz besonders bevorzugt für Wasserstoff oder für einen Rest aus der Reihe F, Cl, Br, Trifluormethyl, Methoxy, Ethoxy, Isopropoxy, tert.-Butoxy, Phenoxy, Cyano, Methoxycarbonyl, Ethoxycarbonyl, tert.-Butoxycarbonyl, Acetoxy, Propionyloxy und Pivaloyloxy und R⁴ steht ganz besonders bevorzugt für Wasserstoff oder Phenyl oder Naphthyl, wobei gegebenenfalls mindestens ein Wasserstoff durch eine Alkylgruppe oder eine funktionelle Gruppe ersetzt ist, vorzugsweise durch C₁-C₄-Alkyl oder C₁-C₄-Alkoxy, oder für einen Rest aus der Reihe F, Cl, Br, Trifluormethyl, Methoxy, Ethoxy, Isopropoxy, tert.-Butoxy, Phenoxy, Cyano, Methoxycarbonyl, Ethoxycarbonyl, tert.-Butoxycarbonyl, Acetoxy, Propionyloxy und Pivaloyloxy und R² und R³ sind ganz besonders bevorzugt Teil eines cylischen aromatischen Systems mit 4 bis 8 Kohlenstoffatomen, wobei die Kohlenstoffatome in Formel (I) nicht mit eingerechnet werden und wobei gegebenenfalls mindestens ein Wasserstoffatom durch eine Alkylgruppe oder eine funktionelle Gruppe ersetzt ist, vorzugsweise durch C₁-C₄-Alky oder C₁-C₄-Alkoxy, oder
- R¹: steht ganz besonders bevorzugt für Wasserstoff oder für einen Rest aus der Reihe F, Cl, Br, Trifluormethyl, Methoxy, Ethoxy, Isopropoxy, tert.-Butoxy, Phenoxy, Cyano, Methoxycarbonyl, Ethoxycarbonyl, tert.-Butoxycarbonyl, Acetoxy, Propionyloxy und Pivaloyloxy und R² steht ganz besonders bevorzugt für Wasserstoff oder Phenyl oder Naphthyl, wobei gegebenenfalls mindestens ein Wasserstoff durch eine Alkylgruppe oder eine funktionelle Gruppe ersetzt ist, vorzugsweise durch C₁-C₄-Alkyl oder C₁-C₄-Alkoxy, oder für einen Rest aus der Reihe F, Cl, Br, Trifluormethyl, Methoxy, Ethoxy, Isopropoxy, tert.-Butoxy, Phenoxy, Cyano, Methoxycarbonyl, Ethoxycarbonyl, tert.-Butoxycarbonyl, Acetoxy, Propionyloxy und Pivaloyloxy und R³ und R⁴ sind ganz besonders bevorzugt Teil eines cylischen aromatischen Systems mit 4 bis 8 Kohlenstoffatomen, wobei die Kohlenstoffatome in Formel (I) nicht mit eingerechnet werden und wobei gegebenenfalls mindestens ein Wasserstoffatom durch eine Alkylgruppe oder eine funktionelle Gruppe ersetzt ist, vorzugsweise durch C₁-C₄-Alkyl oder C₁-C₄-Alkoxy.
- R⁵: steht ganz besonders bevorzugt für einen verzweigten Alkylrest aus der Reihe iso-Propyl, iso-Butyl, sec.-Butyl, tert.-Butyl, verzweigtes Pentyl, verzweigtes Hexyl.
- L: steht ganz besonders bevorzugt für Phosphane PR⁷R⁸R⁹, mit der Maßgabe dass R⁷, R⁸ und R⁹ gleich sind und für Methyl, Ethyl, Cyclopentyl, Cyclohexyl oder Phenyl stehen.

Ganz besonders bevorzugt sind weiterhin die Verbindungen der Formel (II) bis (V), 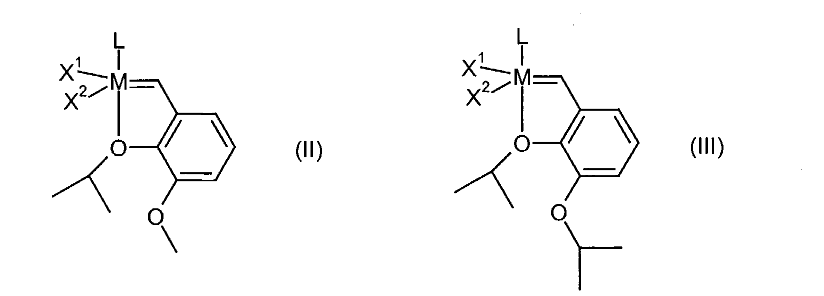 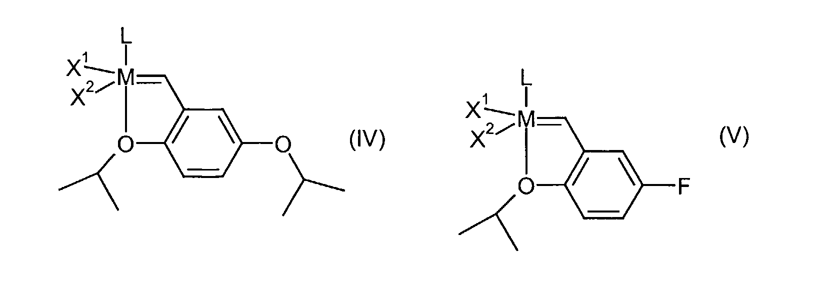 worin
- L: für Tricyclohexylphosphan steht,
- X¹ und X²: für Chlorid stehen und
- M: für Ruthenium steht.

Die oben aufgeführten allgemeinen oder in Vorzugsbereichen aufgeführten Restedefinitionen bzw. Erläuterungen können untereinander, also auch zwischen den jeweiligen Bereichen und Vorzugsbereichen beliebig kombiniert werden. Sie gelten für die Endprodukte sowie für die Vor- und Zwischenprodukte entsprechend.

Vorzugsweise handelt es sich bei den oben genannten funktionellen Gruppen um Reste aus der Reihe Halogen, C₁-C₄-Halogenalkyl, C₁-C₄-Alkoxy, C₁-C₆-Aryloxy, Cyano, C₁-C₄-Alkoxycarbonyl, C₁-C₆-Aryloxycarbonyl, aliphatisches oder aromatisches C₁-C₆-Acyloxy und Sulfonsäuregruppen.

Bei den Alkylgruppen, durch die gegebenenfalls mindestens ein Wasserstoffatom in den für R¹ bis R⁵ definierten Resten ersetzt ist, handelt es sich vorzugsweise um Reste aus der Reihe C₁-C₄-Alkyl, wie Methyl, Ethyl, n-Propyl, iso-Propyl, n-Butyl, iso-Butyl, sec.-Butyl, tert.-Butyl.

Die erfindungsgemäßen Verbindungen der Formel (I) zeigen neben Luftstabilität und Toleranz gegenüber funktionellen Gruppen deutlich höhere Aktivitäten in Metathese-Reaktionen im Vergleich zu den bisher bekannten Systemen, wie beispielsweise den in *Tetrahedron Lett. 41*, **2000,** 9973-9976 und in *J. Am. Chem. Soc. 122*, **2000,** 8168-8179 beschriebenen Systemen, was in der vorliegenden Anmeldung an Hand der Beispiele belegt wird. Die erfindungsgemäßen Verbindungen der Formel (I) eignen sich gleichermaßen für Ringschluss-Metathesen, Ringöffnungsmetathesen, Kreuz-Metathesen und ringöffnende Metathese-Polymerisiationen.

Die erfindungsgemäßen Verbindungen der Formel (I) werden vorzugsweise durch Austauschreaktion des Phosphanliganden PZ₃ in Verbindungen der Formel (VI) durch Liganden der Formel (VII) hergestellt 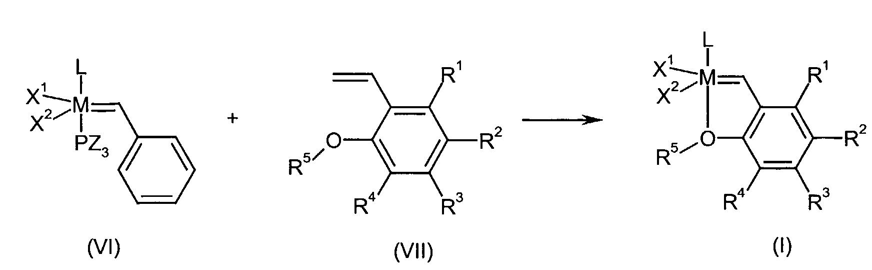 worin
- L: eine der oben genannten Bedeutungen hat,
- M, R¹-R⁵, X¹ und X²: eine der oben genannten Bedeutung haben und

PZ₃ für einen Phosphanliganden, vorzugsweise für Trimethyl-, Triethyl-, Tricyclopentyl-, Tricyclohexyl- oder Triphenylphosphan steht.

Die Herstellung der erfindungsgemäßen Verbindungen der Formel (I) aus Verbindungen der Formel (VI) erfolgt vorzugsweise in einem Lösungsmittel, besonders bevorzugt in Toluol, Benzol, Tetrahydrofuran oder Dichlormethan, ganz besonders bevorzugt in Dichlormethan. Die Umsetzung findet vorzugsweise in Gegenwart von Verbindungen statt, die in der Lage sind, Phosphane abzufangen, besonders bevorzugt in Gegenwart von CuCl₂ und CuCl, ganz besonders bevorzugt in Gegenwart von CuCl. Dabei wird vorzugsweise in Gegenwart von äquimolaren Mengen bzw. eines Überschusses an Phosphanfänger, bezogen auf Verbindungen der Formel (VI), gearbeitet. Wird als Phosphanfänger CuCl eingesetzt, so werden besonders bevorzugt 1 bis 1,5 Äquivalente eingesetzt. Es werden vorzugsweise 0,9 bis 3 Äquivalente der Verbindungen der Formel (VII), bezogen auf Verbindungen der Formel (VI) eingesetzt, besonders bevorzugt 1 bis 2,5 Äquivalente. Die Umsetzung erfolgt vorzugsweise bei Temperaturen von 20 bis 80°C, besonders bevorzugt bei Temperaturen von 30 bis 50°C. Die Umsetzung wird vorzugsweise unter Inertgas wie beispielsweise Stickstoff oder Argon durchgeführt. Die Aufarbeitung erfolgt bevorzugt chromatographisch, besonders bevorzugt säulenchromatographisch an Silicagel.

Weiterhin erfindungsgemäß sind Verbindungen der Formel (VII),
worin
- R¹, R³ und R⁴: für Wasserstoff stehen, und R² für Halogen, C₁-C₄-Halogenalkyl, C₁-C₄-Alkoxy, C₆-C₁₀-Aryloxy, Cyano, C₁-C₄-Alkoxycarbonyl, C₆-C₁₀-Aryloxycarbonyl oder für aliphatisches oder aromatisches C₁-C₁₀-Acyloxy steht, und
- R¹, R² und R⁴: für Wasserstoff stehen, und R³ für Halogen, C₁-C₄-Halogenalkyl, C₁-C₄-Alkoxy, C₆-C₁₀-Aryloxy, Cyano, C₁-C₄-Alkoxycarbonyl, C₆-C₁₀-Aryloxycarbonyl oder für aliphatisches oder aromatisches C₁-C₁₀-Acyloxy steht, und
- R⁵: für Wasserstoff oder für cyclische, geradkettige oder verzweigte Alkylreste mit 1 bis 20 Kohlenstoffatomen oder für Arylreste mit 6 bis 20 Kohlenstoffatomen steht, wobei in den genannten Resten gegebenenfalls mindestens ein Wasserstoffatom durch eine Alkylgruppe oder eine funktionelle Gruppe ersetzt ist,
die als Zwischenprodukte zur Herstellung der erfindungsgemäßen Verbindungen der Formel (I) eingesetzt werden können, wobei die Reste R¹-R⁵ die oben genannten Bedeutungen haben.

Die Herstellung der erfindungsgemäßen Verbindungen (VII) erfolgt vorzugsweise durch Umsetzung von Verbindungen der Formel (XI) in einer Wittig-Reaktion, wie beispielsweise in Maryanoff et al., *Chem. Rev. 89,* **1989,** 863 -927 beschrieben. Um zu den Verbindungen der Formel (XI) zu gelangen, sind mehrere Wege denkbar und in der Literatur genannt. Vorzugsweise wird von Phenolen der Formel (VIII) ausgegangen, welche mit Alkylierungsreagenzien der Formel (IX), worin R⁵ die oben genannten Bedeutungen hat und Y für eine Abgangsgruppe steht, vorzugsweise für einen Rest aus der Reihe Halogen, p-Toluolsulfonyl und Trifluormethansulfonyl, zu Verbindungen der Formel (X) umgesetzt werden (s. Schema). Diese können anschließend nach literaturbekannten Methoden, wie beispielsweise in *J. Chem. Soc., Perkin Trans. 2*, **1999,** 1211-1218 beschrieben, zu den entsprechenden Verbindungen der Formel (XI) umgesetzt werden.

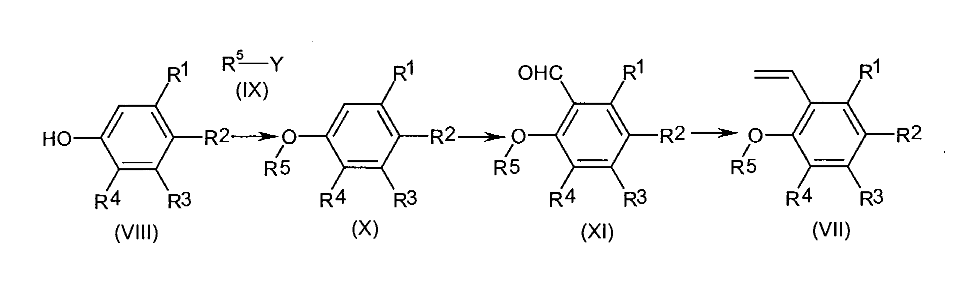

Ebenfalls bevorzugte Varianten, um zu den Verbindungen der Formel (XI) zu gelangen sind einerseits die Umsetzung von Phenolen der Formel (VIII) zu den entsprechenden o-Aldehyden und die Alkylierung dieser Verbindungen zu Verbindungen der Formel (XI), andererseits die Alkylierung der Salicylsäurederivate (XII), Reduktion der Verbindungen (XIII) zu Verbindungen der Formel (XIV) und anschließende Oxidation zu Verbindungen der Formel (XI) nach literaturbekannten Verfahren.

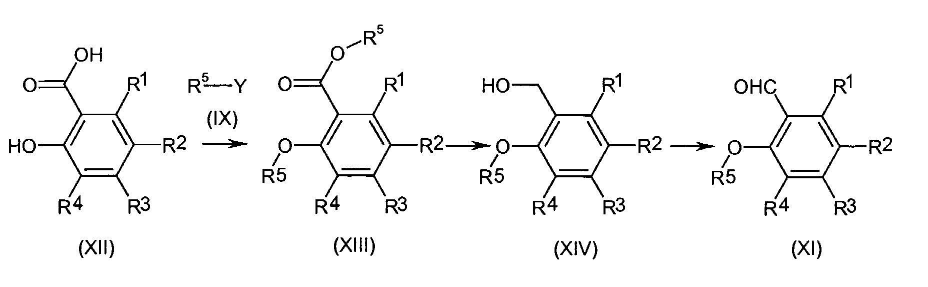

Die erfindungsgemäßen Verbindungen der Formel (VII) können als Liganden zur Herstellung von Übergangsmetallkomplexen verwendet werden, bevorzugt zur Herstellung von Übergangsmetallkomplexen der Formel (I).

Die erfindungsgemäßen Verbindungen der Formel (I) können als Katalysatoren in chemischen Reaktionen eingesetzt werden, vorzugsweise werden sie als Katalysatoren in Metathesereaktionen, wie beispielsweise Kreuzmetathesen, Ringschluss-Metathesen und ringöffnenden Metathesepolymerisationen ggf. mit anschließender Kreuzmetathese, eingesetzt. Ihre sehr hohen Aktivitäten in Ringschluss-Metathesen werden an Hand zahlreicher Beispiele unterschiedlicher Substrate und auch im Vergleich zu bislang bekannten Systemen gezeigt. Die Ringschluss-Metathesen zeigen bereits nach wenigen Minuten quantitative Umsetzungen. Die erfindungsgemäßen Verbindungen der Formel (I) führen bei Einsatz als Ringschluss-Metathesekatalysatoren bereits bei tiefen Temperaturen (vorzugsweise zwischen -10°C und +30°C) nach wenigen Stunden praktisch zu quantitativen Umsätzen, wohingegen literaturbekannte Katalysatoren bei vergleichbaren Reaktionsbedingungen nur Umsätze ≤ 25% bei deutlich längeren Reaktionszeiten zeigen.

### Beispiele

### Beispiel 1: Synthese von 2,3-Diisopropoxystyren

### a) Synthese von 2,3-Diisopropoxybenzaldehyd

Zu einer Lösung aus 2,0 g (14,5 mmol) 2,3-Dihydroxybenzaldehyd in 50 ml Dimethylformamid wurden 8,0 g (57,9 mmol) K₂CO₃ und 8,2 g (49,2 mmol) Kaliumiodid zugegeben und die Reaktionsmischung auf 50°C erwärmt. 5,4 mL (49,2 mmol) Isopropylbromid wurden langsam zugetropft und es wurde weitere 12 h bei 50°C gerührt. Nach beendeter Reaktion wird der Feststoff abfiltriert und die organische Phase mit gesättigter NH₄Cl-Lösung und gesättigter NaCl-Lösung gewaschen, anschließend mit MgSO₄ getrocknet, filtriert und das Lösungsmittel im Vakuum entfernt. Der Rückstand wurde durch Säulenchromatographie an Kieselgel gereinigt (Hexan: Methyl-*tert*butylether 9 : 1). 2,3-Diisopropoxybenzaldehyd wurde in 94% Ausbeute erhalten.

^{**1**}**H-NMR** (500 MHz, CDCl₃) δ = 1.33 (d, J 6.1 Hz, 6H), 1.37 (d, J 6.1 Hz, 6H), 4.57 (septett, J 6.1 Hz, 1H), 4.66 (septett, J 6.1 Hz, 1H), 7.07 (dd, J 7.9 Hz, 1H), 7.13 (dd, J 7.6 Hz, J 1.4 Hz, 1H), 7.42 (dd, J 7.6 Hz, J 1.4 Hz, 1H), 10.45 (s, 1H) ppm.

### b) Synthese von 2,3-Diisopropoxystyren

Zu einem Gemisch aus 4,5 g (40,5 mmol) *t*-BuOK und 14,5 g (40,5 mmol) Ph₃PCH₃Br wurden 120 mL Diethylether bei 0°C zugegeben. Diese Suspension wurde 30 min bei 0°C gerührt und eine Lösung aus 3,0 g (13,5 mmol) 2,3-Diisopropoxybenzaldehyd langsam zugetropft. Die Reaktionsmischung wurde eine weitere Stunde bei 0°C gerührt, der Feststoff abfiltriert, die organische Phase mit gesättigter NH₄Cl-Lösung und gesättigter NaCl-Lösung gewaschen, anschließend mit MgSO₄ getrocknet, filtriert und das Lösungsmittel im Vakuum entfernt. Der Rückstand wurde durch Säulenchromatographie an Kieselgel gereinigt (Hexan). 2,3-Diisopropoxystyrol wurde in 70% Ausbeute erhalten.

^{**1**}**H-NMR** (500 MHz, CDCl₃) δ = 1.30 (s, 3H), 1.31 (s, 3H), 1.37 (s, 3H), 1.50 (s, 3H), 4.48 (septett, J 6.1 Hz, 1H), 4.54 (septett, J 6.1 Hz, 1H), 5.25 (d, J 11 Hz, 1H), 5.71 (d, 17.8 Hz, 1H), 6.83 (d, 7.9 Hz, 1H), 6.83 (dd, J 7.9 Hz, 1H), 6.98 (dd, J 7.9 Hz, 1H), 7.13 (dd, J 11 Hz, J 17.8 Hz, 1H), 7.15 (d, J 7.9 Hz, 1H) ppm.

### Beispiel 2: Synthese einer Ruthenium-Verbindung mit 2,3-Diisopropoxystyren

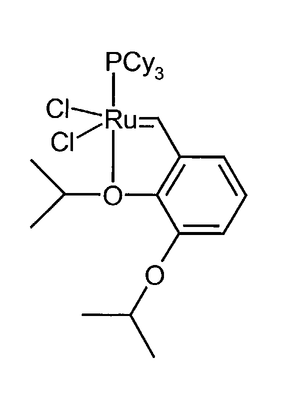

Zu einer Lösung von 0,48 mmol 2,3-Diisopropoxystyren in 20 ml Dichlormethan wurden erst 0,24 mmol Kupfer(I)chlorid und dann 0,24 mmol Bis(tricyclohexylphosphan)[benzyliden]ruthenium(IV)dichlorid zugegeben. Nach 15 min Rühren bei Raumtemperatur (23°C) wurde die Reaktionslösung im Vakuum eingeengt. Der Rückstand wurde in sehr wenig Dichlormethan aufgenommen und über eine Pasteurpipette mit Glaswolle filtriert. Das Filtrat wurde wieder im Vakuum eingeengt und der Rückstand über Kieselgel (Hexan/Methylenchlorid 1:1) chromatographiert. Die gewünschte Verbindung wurde in 36% Ausbeute isoliert.

^{**1**}**H-NMR** (500 MHz, CDCl₃) δ = 1.20-2.40 (m, 33H), 1.38 (d, J 6 Hz, 6H), 1.76 (d, J 6 Hz, 6H), 4.58 (septett, J 6 Hz, 1H), 6.24 (septett, J 6 Hz, 1H), 7.00 (dd, J 7.6 Hz, 1H), 7.17 (d, J 8 Hz, 1H), 7.25 (d, J 6 Hz, 1H), 17.42 (d, J 4 Hz, 1H) ppm.

### Beispiel 3: Synthese von 2-Isopropoxy-3-methoxystyren

### a) Synthese von 2-Isopropoxy-3-methoxybenzaldehyd

Zu einer Lösung aus 10,0 g (65,7 mmol) 2-Hydroxy-3-methoxy-benzaldehyd in 66 mL Dimethylformamid wurden 18,0 g (131,4 mmol) K₂CO₃ und 40 g (328,5 mmol) Isopropylbromid gegeben. Die Reaktionsmischung wurde 12 h bei 60°C gerührt. Nach Abkühlen auf Raumtemperatur (23°C) wurde die Reaktionsmischung in ein Gemisch aus 100 mL H₂O und 100 mL gesättigter NH₄Cl-Lösung gegeben und mit Methyl-*tert*butylether extrahiert. Die organische Phase wurde mit H₂O und gesättigter NaCl-Lösung gewaschen, anschließend mit Na₂SO₄ getrocknet, filtriert und das Lösungsmittel im Vakuum entfernt. 2-Isopropoxy-3-methoxybenzaldehyd wurde in 80% Ausbeute erhalten.

^{**1**}**H-NMR** (250 MHz, CDCl₃) δ = 1.34 (d, J 6 Hz, 6H), 3.88 (s, 3H), 4.62 (septett, J 6 Hz, 1H), 7.12 (dd, J 3 Hz, 2H), 7.44 (dd, J 6 Hz, J 3 Hz, 1H), 10.46 (s, 1H) ppm.

### b) Synthese von 2-Isopropoxy-3-methoxystyren

26,5 g (74,1 mmol) Ph₃PCH₃Br wurden in 240 mL Tetrahydrofuran vorgelegt und mit 4,5 g (40,5 mmol) *t*-BuOK versetzt. Diese Suspension wurde 2 h bei Raumtemperatur (23°C) gerührt, anschließend auf -20°C abgekühlt und eine Lösung aus 12,0 g (61,8 mmol) 2-Isopropoxy-3-methoxybenzaldehyd in 80 mL Tetrahydrofuran langsam zugetropft. Die Reaktionsmischung wurde auf Raumtemperatur (23°C) erwärmt und zwei weitere Stunden gerührt. Die Reaktionsmischung wird im 500 mL H₂O gegeben, mit Methyl-*tert*butylether extrahiert, die organische Phase mit gesättigter NaCl-Lösung gewaschen, anschließend mit Na₂SO₄ getrocknet, filtriert und das Lösungsmittel im Vakuum entfernt. Der Rückstand wurde durch Säulenchromatographie an Kieselgel gereinigt (Hexan: Methyl-*tert*butylether 20 : 1). 2-Isopropoxy-3-methoxystyren wurde in 90% Ausbeute erhalten.

^{**1**}**H-NMR** (250 MHz, CDCl₃) δ = 1.30 (d, J 6 Hz, 6H), 3.48 (s, 3H), 4.42 (septett, J 6 Hz, 1H), 5.26 (dd, J 11 Hz, J 1.4 Hz, 1H), 5.70 (dd, J 18 Hz, J 1.4 Hz, 1H), 6.82 (dd, J 8 Hz, J 1.4 Hz, 1H), 7.02 (dd, J 8 Hz, 1H), 7.06 (d, J 8 Hz, 1H), 7.16 (dd, J 8 Hz, J 1.4 Hz, 1H) ppm.

### Beispiel 4: Synthese einer Ruthenium-Verbindung mit 2-Isopropoxy-3-methoxystyren

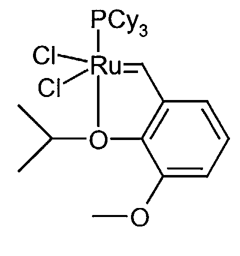

Zu einer Lösung von 82 mg (0,37 mmol) 2-Isopropoxy-3-methoxystyren in 10 mL Dichlormethan wurden erst 20 mg (0,2 mmol) Kupfer(I)chlorid und dann 150 mg (0,19 mmol) Bis(tricyclohexylphosphan)[benzyliden]ruthenium(IV)dichlorid zugegeben. Nach 12 h Rühren bei Raumtemperatur (23°C) wurde die Reaktionslösung im Vakuum eingeengt. Der Rückstand wurde in sehr wenig Dichlormethan aufgenommen und über eine Pasteurpipette mit Glaswolle filtriert. Das Filtrat wurde wieder im Vakuum eingeengt und der Rückstand über Kieselgel (Hexan/Methylenchlorid 1:1) chromatographiert. Die gewünschte Verbindung wurde in 60 % Ausbeute isoliert.

^{**1**}**H-NMR** (250 MHz, CDCl₃) δ = 1.00-2.40 (m, 33H), 1.26 (d, J 6 Hz, 6H), 1.77 (d, J 6 Hz, 6H), 3.88 (s, 3H), 6.14 (septett, J 6 Hz, 1H), 7.04 (m, 2H), 7.23 (d, J 6 Hz, 1H), 17.42 (d, J 4 Hz, 1H) ppm.

### Beispiel 5: Synthese von 2,5-Diisopropoxystyren

### a) Synthese von 2,5-Diisopropoxybenzaldehyd

Zu einer Lösung aus 1,75 g (12,67 mmol) 2,5-Dihydroxybenzaldehyd in 30 ml Dimethylformamid wurden 8,76 g (63,35 mmol) K₂CO₃, 0,51 g (1,38 mmol) Tetrabutylammoniumiodid und 6.23 g (50.68 mmol) Isopropylbromid gegeben und die Reaktionsmischung 12 h bei 50°C gerührt. Nach beendeter Reaktion wurde mit gesättigter NaCl-Lösung und H₂O gewaschen, anschließend mit MgSO₄ getrocknet, filtriert und das Lösungsmittel im Vakuum entfernt. Der Rückstand wurde durch Säulenchromatographie an Kieselgel gereinigt (Hexan: Methyl-tertbutylether 9 : 1). 2,5-Diisopropoxybenzaldehyd wurde in 76% Ausbeute erhalten.

^{**1**}**H-NMR** (500 MHz, CDCl₃) δ = 1.31 (d, J 6 Hz, 6H), 1.37 (d, J 6 Hz, 6H), 4.50 (septett, J 6 Hz, 1H), 4.56 (septett, J 6 Hz, 1H), 6.93 (d, J 10 Hz, 1H), 7.08 (d, J 10 Hz, 1H), 7.35 (s, 1H), 10.45 (s, 1H) ppm.

### b) Synthese von 2,5-Diisopropoxystyren

1,77 g (4,96 mmol) Ph₃PCH₃Br wurden in 10 mL Tetrahydrofuran gegeben, die Mischung auf 0°C abgekühlt und langsam 3.1 mL (4.54 mmol) einer 1,5 M Lösung von Buthyllithium in Tetrahydrofuran zugtropft. Es wurde 10 min bei 0°C gerührt und eine Lösung aus 1,0 g (4,54 mmol) 2,5-Diisopropoxybenzaldehyd in 2 mL Tetrahydrofuran zugetropft. Die Suspension wurde anschließend eine Stunde bei Raumtemperatur (23°C) und eine weitere Stunde unter Rückfluss gerührt. Nach Abkühlen auf Raumtemperatur (23°C) wird H₂O zugegeben, mit Methyl-*tert*butylether extrahiert, die organische Phase mit MgSO₄ getrocknet, filtriert und das Lösungsmittel im Vakuum entfernt. Der Rückstand wurde durch Säulenchromatographie an Kieselgel gereinigt (Hexan : Methylenchlorid 4 : 1). 2,5-Diisopropoxystyrol wurde in 81% Ausbeute erhalten.

^{**1**}**H-NMR** (500 MHz, CDCl₃) δ = 1.25 (d, J 6 Hz, 6H), 1.27 (d, J 6 Hz, 6H), 4.32 (septett, J 6 Hz, 1H), 4.40 (septett, J 6 Hz, 1H), 5.17 (dd, J 11 Hz, J 1.4 Hz, 1H), 5.64 (dd, J 17 Hz, J 1.4 Hz, 1H), 6.70 (dd, J 9 Hz, J 3 Hz, 1H), 6.76 (d, J 9 Hz, 1H), 6.97 (dd, J 17 Hz, J 11 Hz, 1H), 6.98 (d, J 3 Hz, 1H) ppm.

### Beispiel 6: Synthese einer Ruthenium-Verbindung mit 2,5-Diisopropoxystyren

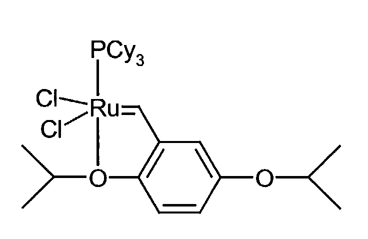

Zu einer Lösung von 0,73 mmol 2,5-Diisopropoxystyren in 12 mL Dichlormethan wurden 0,61 mmol Bis(tricyclohexylphosphan)[benzyliden]ruthenium(IV)dichlorid zugegeben. Nach 48 h Rühren bei Raumtemperatur (23°C) wurde die Reaktionslösung im Vakuum eingeengt. Der Rückstand wurde in sehr wenig Dichlormethan aufgenommen und über eine Pasteurpipette mit Glaswolle filtriert. Das Filtrat wurde wieder im Vakuum eingeengt und der Rückstand über Kieselgel (Hexan/Methylenchlorid 1:1) chromatographiert. Die gewünschte Verbindung wurde in 66% Ausbeute isoliert.

^{**1**}**H-NMR** (500 MHz, CDCl₃) δ = 1.20-2.40 (m, 33H), 1.35 (d, J 6 Hz, 6H), 1.78 (d, J 6 Hz, 6H), 4.50 (septett, J 6 Hz, 1H), 5.19 (septett, J 6 Hz, 1H), 6.96 (d, J 9 Hz, 1H), 7.17 (d, J 3 Hz, 1H), 7.19 (s, 1H), 17.33 (d, J 4 Hz, 1H) ppm.

### Beispiel 7: Synthese von 2-Fluor-5-isopropoxystyren

### a) Synthese von 2-Fluor-5-isopropoxybenzaldehyd

Zu einer Lösung aus 1,2 g (6,5 mmol) (2-Fluor-5-isopropoxyphenyl)methanol in 12 ml Diethylether werden unter Rühren 6,1 g (32,6 mmol) MnO₂ zugegeben. Die Reaktionsmischung wird 4 h bei 23°C gerührt. Nach beendeter Reaktion wird über wenig Zelite filtriert und mit Diethylether nachgewaschen. Nach Entfernen des Lösungsmittels erhält man 1,2 g (90% Ausbeute) 2-Fluor-5-isopropoxybezaldehyd als farbloses Öl.

^{**1**}**H-NMR** (200 MHz, CDCl₃): δ = 1.42 (6 H, d, J 6 Hz), 4.62 (1 H, quintett, J 6 Hz), 6.96 (1 H, dd, J 10 Hz, J 6 Hz), 7.07-7.14 (1 H, m), 7.48 (1 H, dd, J 8 Hz, J 4 Hz), 10.40 (1 H, d, J 4 Hz) ppm.

### b) Synthese von 2-Fluor-5-isopropoxystyren

Zu einer Suspension von 4,5 g (12,7 mmol) Ph₃PCH₃Br in 36 ml Diethylether werden unter Rühren bei 0°C 1,4 g (12,7 mmol) *t*-BuOK zugegeben. Die Reaktionsmischung wird 10 min bei 0°C gerührt und anschließend langsam eine Lösung aus 1,2 g (6,4 mmol) 2-Fluor-5-isopropoxybezaldehyd in 24 ml Diethylether zugetropft. Es wird weitere 10 min bei 0°C gerührt, auf Raumtemperatur (23°C) erwärmt und dann mit gesättigter NH₄Cl-Lösung gequencht. Anschließend wird mit Diethylether extrahiert und die organische Phase mit Wasser und gesättigter NaCl-Lösung. Nach dem Trocknen mit MgSO₄ wird das Lösungsmittel abdestilliert und man erhält 1,0 g (89% Ausbeute) 2-Fluor-5-isopropoxystyren als farbloses Öl.

^{**1**}**H-NMR** (500 MHz, CDCl₃): δ = 1.33 (6 H, d, J 6 Hz), 4.43 (1 H, quintett, J 6 Hz), 5.28 (1 H, d, J 11 Hz), 5.71 (1 H, d, J 17.7 Hz), 6.83 (1 H, dd, J 4.7 Hz, J 8.8 Hz), 6.88 (1 H, ddd, J 1.6 Hz, J 7.8 Hz), 7.02 (1 H, dd, J 17.7 Hz, J 11.1 Hz), 7.18 (1 H, dd, J 9.5 Hz, J 2.5 Hz) ppm.

### Beispiel 8: Synthese einer Ruthenium-Verbindung mit 2-Fluor-5-isopropoxystyren

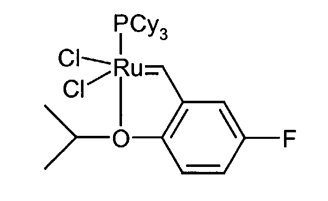

Zu einer Lösung aus 133 mg (0.32 mmol) Bis(tricyclohexylphosphan)[benzyliden]-ruthenium(IV)dichlorid und 16 mg (0,16 mmol) CuCl in 10 ml CH₂Cl₂ wird eine Lösung aus 59 mg (0.32 mmol) 2-Fluor-5-isopropoxystyren in 3 ml CH₂Cl₂ zugegeben. Die Reaktionsmischung wird 12 h bei 25°C gerührt. Nach beendeter Reaktion wird das Lösungsmittel am Rotationsverdampfer entfernt und der Rückstand in wenig CH₂Cl₂ gelöst und diese Lösung über wenig Watte filtriert. Das Lösungsmittel wird erneut am Rotationsverdampfer entfernt und der Rückstand an SiO₂ chromatographiert (Cyclohexan 9 : 1 Essigsäureethylester). Man erhält 90 mg (45% Ausbeute) der gewünschten Verbindung.

^{**1**}**H-NMR** (500 MHz, C₆D₆) δ = 1.11-2.42 (m, 33H), 1.69 (d, J 6 Hz, 6H), 4.59 (quintett, J 6 Hz, 1H), 6.26 (dd, J 9 Hz, J 4 Hz, 1H), 6.89-6.91 (m , 1H), 6.99 (dd, J 8 Hz, J 4 Hz, 1H), 17.09 (d, J 4 Hz, 1H) ppm.

### Beispiel 9: RCM, wobei als Katalysator die Verbindung aus Beispiel 2 eingesetzt wurde

Eine 0.01 M Lösung N,N-Bisallyltosylamid in Dichlormethan wurde bei Raumtemperatur mit 1 mol% der Verbindung aus Beispiel 2 versetzt. Der Umsatz der Reaktion in Abhängigkeit von der Zeit wurde, bei Raumtemperatur, über das Verhältnis Edukt/Produkt mittels HPLC verfolgt. (HPLC-Bedingungen: Säule: RP-7 (4 mm), Laufmittel: Methanol : H₂O 8 : 1, Wellenlänge: 254 nm, Retentionszeit: Edukt 4.42 min, Produkt 3.15 min) Die Ergebnisse sind in Tabelle 1 aufgeführt.

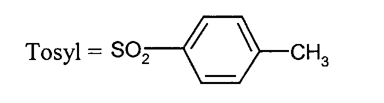

Analog dazu wurde der Umsatz bei Einsatz des Katalysators nach Formel (A) (Hoveyda et al., *J. Am. Chem. Soc.* **1999,** *121,* 791-799), 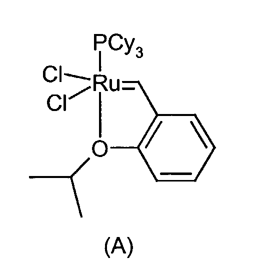 worin

PCy₃ für einen Tricyclohexylphosphan-Rest steht, bestimmt. Die Ergebnisse sind in Tabelle 1 aufgeführt.

### Beispiel 10: RCM, wobei als Katalysator die Verbindung aus Beispiel 4 eingesetzt wurde

Eine 0.01 M Lösung N,N-Bisallyltosylamid in Dichlormethan wurde bei Raumtemperatur mit 1 mol% der Verbindung aus Beispiel 4 versetzt. Der Umsatz der Reaktion in Abhängigkeit von der Zeit wurde, bei Raumtemperatur, über das Verhältnis Edukt/Produkt mittels HPLC verfolgt. (HPLC-Bedingungen: Säule: RP-7 (4 mm), Laufmittel: Methanol : H₂O 8 : 1, Wellenlänge: 254 nm, Retentionszeit: Edukt 4.42 min, Produkt 3.15 min) Die Ergebnisse sind in Tabelle 1 aufgeführt.

Analog dazu wurde der Umsatz bei Einsatz von 1 mol% des Katalysators nach Formel (A) bestimmt. Die Ergebnisse sind in Tabelle 1 aufgeführt.

### Beispiel 11: RCM, wobei als Katalysator die Verbindung aus Beispiel 6 eingesetzt wurde

Eine 0.01 M Lösung N,N-Bisallyltosylamid in Dichlormethan wurde bei Raumtemperatur mit 1 mol% der Verbindung aus Beispiel 6 versetzt. Der Umsatz der Reaktion in Abhängigkeit von der Zeit wurde, bei Raumtemperatur, über das Verhältnis Edukt/Produkt mittels HPLC verfolgt. (HPLC-Bedingungen: Säule: RP-7 (4 mm), Laufmittel: Methanol : H₂O 8 : 1, Wellenlänge: 254 nm, Retentionszeit: Edukt 4.42 min, Produkt 3.15 min) Die Ergebnisse sind in Tabelle 1 aufgeführt.

Analog dazu wurde der Umsatz bei Einsatz von 1 mol% des Katalysators nach Formel (A) bestimmt. Die Ergebnisse sind in Tabelle 1 aufgeführt.

### Beispiel 12: RCM, wobei als Katalysator die Verbindung aus Beispiel 8 eingesetzt wurde

Eine 0.01 M Lösung N,N-Bisallyltosylamid in Dichlormethan wurde bei Raumtemperatur mit 1 mol% der Verbindung aus Beispiel 8 versetzt. Der Umsatz der Reaktion in Abhängigkeit von der Zeit wurde, bei Raumtemperatur, über das Verhältnis Edukt/Produkt mittels HPLC verfolgt. (HPLC-Bedingungen: Säule: RP-7 (4 mm), Laufmittel: Methanol : H₂O 8 : 1, Wellenlänge: 254 nm, Retentionszeit: Edukt 4.42 min, Produkt 3.15 min) Die Ergebnisse sind in Tabelle 2 aufgeführt.

Analog dazu wurde der Umsatz bei Einsatz von 1 mol% des Katalysators nach Formel (A) bestimmt. Die Ergebnisse sind in Tabelle 1 aufgeführt.

**Tabelle 1**

| Zeit | Umsatz (%) | | | | |
|---|---|---|---|---|---|
| (min) | Katalysator (A) | Verbindung aus Beispiel 2 | Verbindung aus Beispiel 4 | Verbindung aus Beispiel 6 | Verbindung aus Beispiel 8 |
| 3 | 5 | 8 | 7 | 0 | 3 |
| 10 | 7 | 45 | - | 1 | - |
| 18 | 10 | 74 | 69 | 24 | - |
| 25 | 17 | 83 | 79 | 40 | 34 |
| 33 | 26 | 86 | 84 | 57 | - |
| 48 | 47 | - | 86 | 76 | 81 |
| 62 | 64 | 90 | 88 | - | 89 |
| 90 | 76 | - | - | 88 | - |
| 107 | 82 | 91 | - | 89 | 93 |
| 125 | 84 | 91 | - | - | - |
| 140 | 85 | 92 | 88 | 89 | 92 |

## Patentansprüche

1. Verbindungen der Formel (I), **dadurch gekennzeichnet, dass** 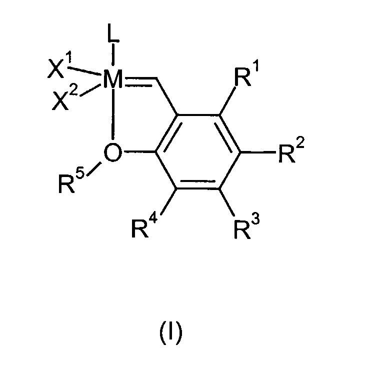
M für ein Übergangsmetall der 8. Nebengruppe des Periodensystems steht,
X¹ und X² gleich oder verschieden sind und für einen anionischen Liganden stehen,
R¹, R², R³ und R⁴ gleich oder verschieden sind und für Wasserstoff stehen, mit der Maßgabe, dass mindestens ein Rest R¹ bis R⁴ von Wasserstoff verschieden ist, oder für cyclische, geradkettige oder verzweigte Alkylreste mit 1 bis 50 Kohlenstoffatomen oder für Arylreste mit 6 bis 30 Kohlenstoffatomen stehen, wobei in den genannten Resten gegebenenfalls mindestens ein Wasserstoffatom durch eine Alkylgruppe oder eine funktionelle Gruppe ersetzt ist, und mindestens einer der Reste R¹ bis R⁴ für Halogen, C₁-C₄-Halogenalkyl, C₁-C₄-Alkoxy, C₆-C₁₀-Aryloxy, Cyano, C₁-C₄-Alkoxycarbonyl, C₆-C₁₀-Aryloxycarbonyl oder für aliphatisches oder aromatisches C₁-C₁₀-Acyloxy steht, und/oder
R¹ und R² oder R² und R³ oder R³ und R⁴ oder R⁴ und R⁵ Teil eines cyclischen Systems sind, welches aus einem Kohlenstoffgerüst mit 3 bis 20 Kohlenstoffatomen besteht, wobei die Kohlenstoffatome in Formel (I) nicht mit eingerechnet werden und wobei gegebenenfalls mindestens ein Wasserstoffatom durch eine Alkylgruppe oder eine funktionelle Gruppe ersetzt ist, und/oder gegebenenfalls mindestens ein Kohlenstoffatom des Cyclus durch ein Heteroatom aus der Reihe S, P, O und N ersetzt ist und
R⁵ für Wasserstoff oder für cyclische, geradkettige oder verzweigte Alkylreste mit 1 bis 20 Kohlenstoffatomen oder für Arylreste mit 6 bis 20 Kohlenstoffatomen steht, wobei in den genannten Resten gegebenenfalls mindestens ein Wasserstoffatom durch eine Alkylgruppe oder eine funktionelle Gruppe ersetzt ist, wobei R² und R³ nicht Teil eines cyclischen, aromatischen Systems mit 4 Kohlenstoffatomen sein dürfen, die Kohlenstoffatome in Formel (I) nicht mit eingerechnet, wenn R⁵ gleichzeitig für Methyl steht, und
L für neutrale Zweielektronen-Donoren aus der Reihe Amine, Imine, Phosphane, Phosphite, Stibine, Arsine, CO, Carbonylverbindungen, Nitrile, Alkohole, Thiole, Ether und Thioether steht.

2. Verbindungen gemäß Anspruch 1, **dadurch gekennzeichnet, dass**
M für Ruthenium oder Osmium steht,
X¹ und X² gleich oder verschieden sind und für einen anionischen Liganden aus der Reihe Halogenide, Pseudohalogenide, Hydroxide, Alkoxide, Carboxylate und Sulfonate stehen, wobei die Pseudohalogenide vorzugsweise Cyanid, Rhodanid, Cyanat, Isocyanat, Thiocyanat und Isothiocyanat sind,
R¹, R², R³ und R⁴ gleich oder verschieden sind und für Wasserstoff stehen, mit der Maßgabe, dass mindestens ein Rest R¹ bis R⁴ von Wasserstoff verschieden ist, oder für cyclische, geradkettige oder verzweigte Alkylreste mit 1 bis 20 Kohlenstoffatomen oder für Arylreste mit 6 bis 20 Kohlenstoffatomen stehen, wobei in den genannten Alkyl- und Arylresten gegebenenfalls mindestens ein Wasserstoffatom durch eine funktionelle Gruppe ersetzt ist, und mindenstens einer der Reste R¹ bis R⁴ für Halogen, C₁-C₄-Halogenalkyl, C₁-C₄-Alkoxy, C₆-C₁₀-Aryloxy, Cyano, C₁-C₄-Alkoxycarbonyl, C₆-C₁₀-Aryloxycarbonyl oder für aliphatisches oder aromatisches C₁-C₁₀-Acyloxy steht, oder
R¹, R² und R³ für Wasserstoff stehen und R⁴ für einen cyclischen, geradkettigen oder verzweigten Alkylrest mit 1 bis 20 Kohlenstoffatomen oder einen Arylrest mit 6 bis 20 Kohlenstoffatomen steht, wobei in den genannten Resten gegebenenfalls mindestens ein Wasserstoffatom durch eine Alkylgruppe oder eine funktionelle Gruppe ersetzt ist, oder für Halogen, C₁-C₄-Halogenalkyl, C₁-C₄-Alkoxy, C₆-C₁₀-Aryloxy, Cyano, C₁-C₄-Alkoxycarbonyl, C₆-C₁₀-Aryloxycarbonyl oder für aliphatisches oder aromatisches C₁-C₁₀-Acyloxy steht, oder
R², R³ und R⁴ für Wasserstoff stehen und R¹ für einen cyclischen, geradkettigen oder verzweigten Alkylrest mit 1 bis 20 Kohlenstoffatomen oder einen Arylrest mit 6 bis 20 Kohlenstoffatomen, wobei in den genannten Resten gegebenenfalls mindestens ein Wasserstoffatom durch eine Alkylgruppe oder eine funktionelle Gruppe ersetzt ist, oder für Halogen, C₁-C₄-Halogenalkyl, C₁-C₄-Alkoxy, C₆-C₁₀-Aryloxy, Cyano, C₁-C₄-Alkoxycarbonyl, C₆-C₁₀-Aryloxycarbonyl oder für aliphatisches oder aromatisches C₁-C₁₀-Acyloxy steht, oder
R¹, R³ und R⁴ für Wasserstoff stehen und R² für einen cyclischen, geradkettigen oder verzweigten Alkylrest mit 1 bis 20 Kohlenstoffatomen oder einen Arylrest mit 6 bis 20 Kohlenstoffatomen, wobei in den genannten Resten gegebenenfalls mindestens ein Wasserstoffatom durch eine Alkylgruppe oder eine funktionelle Gruppe ersetzt ist, oder für Halogen, C₁-C₄-Halogenalkyl, C₁-C₄-Alkoxy, C₆-C₁₀-Aryloxy, Cyano, C₁-C₄-Alkoxycarbonyl, C₆-C₁₀-Aryloxycarbonyl oder für aliphatisches oder aromatisches C₁-C₁₀-Acyloxy steht, oder
R¹, R² und R⁴ für Wasserstoff stehen und R³ für einen cyclischen, geradkettigen oder verzweigten Alkylrest mit 1 bis 20 Kohlenstoffatomen oder einen Arylrest mit 6 bis 20 Kohlenstoffatomen, wobei in den genannten Resten gegebenenfalls mindestens ein Wasserstoffatom durch eine Alkylgruppe oder eine funktionelle Gruppe ersetzt ist, oder für Halogen, C₁-C₄-Halogenalkyl, C₁-C₄-Alkoxy, C₆-C₁₀-Aryloxy, Cyano, C₁-C₄-Alkoxycarbonyl, C₆-C₁₀-Aryloxycarbonyl oder für aliphatisches oder aromatisches C₁-C₁₀-Acyloxy steht, oder
R¹ und R⁴ gleich oder verschieden sind und für Wasserstoff oder einen Arylrest mit 6 bis 20 Kohlenstoffatomen stehen, wobei im Arylrest gegebenenfalls mindestens ein Wasserstoffatom durch eine Alkylgruppe oder eine funktionelle Gruppe ersetzt ist, oder für Halogen, C₁-C₄-Halogenalkyl, C₁-C₄-Alkoxy, C₆-C₁₀-Aryloxy, Cyano, C₁-C₄-Alkoxycarbonyl, C₆-C₁₀-Aryloxycarbonyl oder für aliphatisches oder aromatisches C₁-C₁₀-Acyloxy stehen und R² und R³ Teil eines cylischen aromatischen Systems mit 4 bis 14 Kohlenstoffatomen sind, wobei die Kohlenstoffatome in Formel (I) gemäß Anspruch 1 nicht mit eingerechnet werden und wobei gegebenenfalls mindestens ein Wasserstoffatom durch eine Alkylgruppe oder eine funktionelle Gruppe ersetzt ist, oder
R¹ und R² gleich oder verschieden sind und für Wasserstoff oder einen Arylrest mit 6 bis 20 Kohlenstoffatomen stehen, wobei im Arylrest gegebenenfalls mindestens ein Wasserstoffatom durch eine Alkylgruppe oder eine funktionelle Gruppe ersetzt ist, oder für Halogen, C₁-C₄-Halogenalkyl, C₁-C₄-Alkoxy, C₆-C₁₀-Aryloxy, Cyano, C₁-C₄-Alkoxycarbonyl, C₆-C₁₀-Aryloxycarbonyl oder für aliphatisches oder aromatisches C₁-C₁₀-Acyloxy stehen und R³ und R⁴ Teil eines cylischen aromatischen Systems mit 4 bis 14 Kohlenstoffatomen sind, wobei die Kohlenstoffatome in Formel (I) gemäß Anspruch 1 nicht mit eingerechnet werden und wobei gegebenenfalls mindestens ein Wasserstoffatom durch eine Alkylgruppe oder eine funktionelle Gruppe ersetzt ist,
R⁵ für einen geradkettigen oder verzweigten Alkylrest mit 1 bis 20 Kohlenstoffatomen steht, wobei R² und R³ nicht Teil eines cyclischen, aromatischen Systems mit 4 Kohlenstoffatomen sein dürfen, die Kohlenstoffatome in Formel (I) nicht mit eingerechnet, wenn R⁵ gleichzeitig für Methyl steht, und
L die in Anspruch 1 genannte Bedeutung hat.

3. Verbindungen gemäß wenigstens einem der Ansprüche 1 und 2, **dadurch gekennzeichnet, dass**
L für Phosphanliganden PR⁷R⁸R⁹ steht, mit der Maßgabe, dass R⁷, R⁸, R⁹ gleich oder verschieden sein können und für cyclische, geradkettige oder verzweigte Alkylreste mit 1-10 Kohlenstoffatomen oder für Arylreste mit 6 bis 14 Kohlenstoffatomen stehen, wobei in den genannten Alkyl- oder Arylresten gegebenenfalls mindestens ein Wasserstoffatom ersetzt ist durch eine Alkylgruppe oder eine funktionelle Gruppe, und
M, X¹, X², R¹ bis R⁵ die in wenigstens einem der Ansprüche 1 und 2 genannten Bedeutungen haben.

4. Verbindungen gemäß wenigstens einem der Ansprüche 1 bis 3, **dadurch gekennzeichnet, dass**
M für Ruthenium steht,
X¹ und X² gleich sind und für einen anionischen Liganden aus der Reihe Halogenide und Pseudohalogenide stehen, wobei die Pseudohalogenide vorzugsweise Cyanid, Rhodanid, Cyanat und Isocyanat sind,
R¹, R², R³ und R⁴ gleich oder verschieden sind und für Wasserstoff stehen mit der Maßgabe, dass mindestens ein Rest R¹ bis R⁴ von Wasserstoff verschieden ist, oder für cyclische, geradkettige oder verzweigte Alkylreste mit 1 bis 10 Kohlenstoffatomen oder für Arylreste mit 6 bis 14 Kohlenstoffatomen stehen, wobei in den genannten Alkyl- oder Arylresten gegebenenfalls mindestens ein Wasserstoffatom durch eine Alkylgruppe oder eine funktionelle Gruppe ersetzt ist, und mindestens einer der Reste R¹ bis R⁴ für Halogen, C₁-C₄-Halogenalkyl, C₁-C₄-Alkoxy, C₆-C₁₀-Aryloxy, Cyano, C₁-C₄-Alkoxycarbonyl, C₆-C₁₀-Aryloxycarbonyl oder für aliphatisches oder aromatisches C₁-C₁₀-Acyloxy steht, oder
R¹, R² und R³ für Wasserstoff stehen und R⁴ für einen Arylrest mit 6 bis 14 Kohlenstoffatomen steht, wobei gegebenenfalls mindestens ein Wasserstoffatom im Arylrest durch eine Alkylgruppe oder eine funktionelle Gruppe ersetzt ist, oder für Halogen, C₁-C₄-Halogenalkyl, C₁-C₄-Alkoxy, C₆-C₁₀-Aryloxy, Cyano, C₁-C₄-Alkoxycarbonyl, C₆-C₁₀-Aryloxycarbonyl oder für aliphatisches oder aromatisches C₁-C₁₀-Acyloxy steht, oder
R², R³ und R⁴ für Wasserstoff stehen und R¹ für einen cyclischen, geradkettigen oder verzweigten Alkylrest mit 1 bis 20 Kohlenstoffatomen oder einen Arylrest mit 6 bis 20 Kohlenstoffatomen, wobei in den genannten Resten gegebenenfalls mindestens ein Wasserstoffatom durch eine Alkylgruppe oder eine funktionelle Gruppe ersetzt ist, oder für Halogen, C₁-C₄-Halogenalkyl, C₁-C₄-Alkoxy, C₆-C₁₀-Aryloxy, Cyano, C₁-C₄-Alkoxycarbonyl, C₆-C₁₀-Aryloxycarbonyl oder für aliphatisches oder aromatisches C₁-C₁₀-Acyloxy steht, oder
R¹, R³ und R⁴ für Wasserstoff stehen und R² für einen cyclischen, geradkettigen oder verzweigten Alkylrest mit 1 bis 20 Kohlenstoffatomen oder einen Arylrest mit 6 bis 20 Kohlenstoffatomen, wobei in den genannten Resten gegebenenfalls mindestens ein Wasserstoffatom durch eine Alkylgruppe oder eine funktionelle Gruppe ersetzt ist, oder für Halogen, C₁-C₄-Halogenalkyl, C₁-C₄-Alkoxy, C₆-C₁₀-Aryloxy, Cyano, C₁-C₄-Alkoxycarbonyl, C₆-C₁₀-Aryloxycarbonyl oder für aliphatisches oder aromatisches C₁-C₁₀-Acyloxy steht, oder
R¹, R² und R⁴ für Wasserstoff stehen und R³ für einen cyclischen, geradkettigen oder verzweigten Alkylrest mit 1 bis 20 Kohlenstoffatomen oder einen Arylrest mit 6 bis 20 Kohlenstoffatomen, wobei in den genannten Resten gegebenenfalls mindestens ein Wasserstoffatom durch eine Alkylgruppe oder eine funktionelle Gruppe ersetzt ist, oder für Halogen, C₁-C₄-Halogenalkyl, C₁-C₄-Alkoxy, C₆-C₁₀-Aryloxy, Cyano, C₁-C₄-Alkoxycarbonyl, C₆-C₁₀-Aryloxycarbonyl oder für aliphatisches oder aromatisches C₁-C₁₀-Acyloxy steht, oder
R¹ für Wasserstoff oder für Halogen, C₁-C₄-Halogenalkyl, C₁-C₄-Alkoxy, C₆-C₁₀-Aryloxy, Cyano, C₁-C₄-Alkoxycarbonyl, C₆-C₁₀-Aryloxycarbonyl oder für aliphatisches oder aromatisches C₁-C₁₀-Acyloxy steht und R⁴ für Wasserstoff oder einen Arylrest mit 6 bis 14 Kohlenstoffatomen steht, wobei gegebenenfalls mindestens ein Wasserstoffatom im Arylrest durch eine Alkylgruppe oder eine funktionelle Gruppe ersetzt ist, oder für Halogen, C₁-C₄-Halogenalkyl, C₁-C₄-Alkoxy, C₆-C₁₀-Aryloxy, Cyano, C₁-C₄-Alkoxycarbonyl, C₆-C₁₀-Aryloxycarbonyl oder für aliphatisches oder aromatisches C₁-C₁₀-Acyloxy steht und R² und R³ Teil eines cylischen aromatischen Systems mit 4 bis 8 Kohlenstoffatomen sind, wobei die Kohlenstoffatome in Formel (I) gemäß Anspruch 1 nicht mit eingerechnet werden und wobei gegebenenfalls mindestens ein Wasserstoffatom durch eine Alkylgruppe oder eine funktionelle Gruppe ersetzt ist, oder
R¹ für Wasserstoff oder für Halogen, C₁-C₄-Halogenalkyl, C₁-C₄-Alkoxy, C₆-C₁₀-Aryloxy, Cyano, C₁-C₄-Alkoxycarbonyl, C₆-C₁₀-Aryloxycarbonyl oder für aliphatisches oder aromatisches C₁-C₁₀-Acyloxy steht und R² für Wasserstoff oder einen Arylrest mit 6 bis 14 Kohlenstoffatomen steht, wobei gegebenenfalls mindestens ein Wasserstoffatom im Arylrest durch eine Alkylgruppe oder eine funktionelle Gruppe ersetzt ist, oder für Halogen, C₁-C₄-Halogenalkyl, C₁-C₄-Alkoxy, C₆-C₁₀-Aryloxy, Cyano, C₁-C₄-Alkoxycarbonyl, C₆-C₁₀-Aryloxycarbonyl oder für aliphatisches oder aromatisches C₁-C₁₀-Acyloxy steht und R³ und R⁴ Teil eines cylischen aromatischen Systems mit 4 bis 8 Kohlenstoffatomen sind, wobei die Kohlenstoffatome in Formel (I) gemäß Anspruch 1 nicht mit eingerechnet werden und wobei gegebenenfalls mindestens ein Wasserstoffatom durch eine Alkylgruppe oder eine funktionelle Gruppe ersetzt ist,
R⁵ für einen verzweigten Alkylrest mit 3 bis 8 Kohlenstoffatomen steht, und
L für Phosphanliganden PR⁷R⁸R⁹ steht, mit der Maßgabe dass R⁷, R⁸ und R⁹ gleich sind und für Methyl, Ethyl, Cyclopentyl, Cyclohexyl oder Phenyl stehen.

5. Verbindungen gemäß wenigstens einem der Ansprüche 1 bis 4, **dadurch gekennzeichnet, dass**
M für Ruthenium steht,
X¹ und X² gleich sind und für ein Halogenid stehen
R¹, R² und R³ für Wasserstoff stehen und R⁴ für einen Phenyl- oder Naphthylrest, wobei gegebenenfalls mindestens ein Wasserstoffatom durch eine Alkylgruppe oder eine funktionelle Gruppe ersetzt ist, oder für einen Rest aus der Reihe F, Cl, Br, Triflourmethyl, Methoxy, Ethoxy, Isopropoxy, tert.-Butoxy, Phenoxy, Cyano, Methoxycarbonyl, Ethoxycarbonyl, tert.-Butoxycarbonyl, Acetoxy, Propionyloxy und Pivaloyloxy steht, oder
R¹, R² und R⁴ für Wasserstoff stehen und R³ für einen Rest aus der Reihe F, Cl, Br, Trifluormethyl Methoxy, Ethoxy, Isopropoxy, tert.-Butoxy, Phenoxy, Cyano, Methoxycarbonyl, Ethoxycarbonyl, tert.-Butoxycarbonyl, Acetoxy, Propionyloxy und Pivaloyloxy steht, oder
R¹, R³ und R⁴ für Wasserstoff stehen und R² für einen Rest aus der Reihe F, Cl, Br, Trifluormethyl Methoxy, Ethoxy, Isopropoxy, tert.-Butoxy, Phenoxy, Cyano, Methoxycarbonyl, Ethoxycarbonyl, tert.-Butoxycarbonyl, Acetoxy, Propionyloxy und Pivaloyloxy steht, oder
R², R³ und R⁴ für Wasserstoff stehen und R¹ für einen Rest aus der Reihe F, Cl, Br, Trifluormethyl, Methoxy, Ethoxy, Isopropoxy, tert.-Butoxy, Phenoxy, Cyano, Methoxycarbonyl, Ethoxycarbonyl, tert.-Butoxycarbonyl, Acetoxy, Propionyloxy und Pivaloyloxy steht, oder
R¹ für Wasserstoff oder für einen Rest aus der Reihe F, Cl, Br, Trifluormethyl, Methoxy, Ethoxy, Isopropoxy, tert.-Butoxy, Phenoxy, Cyano, Methoxycarbonyl, Ethoxycarbonyl, tert.-Butoxycarbonyl, Acetoxy, Propionyloxy und Pivaloyloxy steht und R⁴ für Wasserstoff oder Phenyl oder Naphthyl, wobei gegebenenfalls mindestens ein Wasserstoff durch eine Alkylgruppe oder eine funktionelle Gruppe ersetzt ist, oder für einen Rest aus der Reihe F, Cl, Br, Trifluormethyl, Methoxy, Ethoxy, Isopropoxy, tert.-Butoxy, Phenoxy, Cyano, Methoxycarbonyl, Ethoxycarbonyl, tert.-Butoxycarbonyl, Acetoxy, Propionyloxy und Pivaloyloxy steht und R² und R³ Teil eines cylischen aromatischen Systems mit 4 bis 8 Kohlenstoffatomen sind, wobei die Kohlenstoffatome in Formel (I) nicht mit eingerechnet werden und wobei gegebenenfalls mindestens ein Wasserstoffatom durch eine Alkylgruppe oder eine funktionelle Gruppe ersetzt ist, oder
R¹ für Wasserstoff oder für einen Rest aus der Reihe F, Cl, Br, Trifluormethyl, Methoxy, Ethoxy, Isopropoxy, tert.-Butoxy, Phenoxy, Cyano, Methoxycarbonyl, Ethoxycarbonyl, tert.-Butoxycarbonyl, Acetoxy, Propionyloxy und Pivaloyloxy steht und R² für Wasserstoff oder Phenyl oder Naphthyl, wobei gegebenenfalls mindestens ein Wasserstoff durch eine Alkylgruppe oder eine funktionelle Gruppe ersetzt ist, oder für einen Rest aus der Reihe F, Cl, Br, Trifluormethyl, Methoxy, Ethoxy, Isopropoxy, tert.-Butoxy, Phenoxy, Cyano, Methoxycarbonyl, Ethoxycarbonyl, tert.-Butoxycarbonyl, Acetoxy, Propionyloxy und Pivaloyloxy steht und R³ und R⁴ Teil eines cylischen aromatischen Systems mit 4 bis 8 Kohlenstoffatomen sind, wobei die Kohlenstoffatome in Formel (I) nicht mit eingerechnet werden und wobei gegebenenfalls mindestens ein Wasserstoffatom durch eine Alkylgruppe oder eine funktionelle Gruppe ersetzt ist,
R⁵ für einen verzweigten Alkylrest aus der Reihe iso-Propyl, iso-Butyl, sec.-Butyl, tert.-Butyl, verzweigtes Pentyl, verzweigtes Hexyl steht, und
L für Phosphane PR⁷R⁸R⁹ steht, mit der Maßgabe dass R⁷, R⁸ und R⁹ gleich sind und für Methyl, Ethyl, Cyclopentyl, Cyclohexyl oder Phenyl stehen.

6. Verfahren zur Herstellung von Verbindungen der Formel (I) gemäß wenigstens einem der Ansprüche 1 bis 5, **dadurch gekennzeichnet, dass** der Phosphanligand PZ₃ in Verbindungen der Formel (VI) 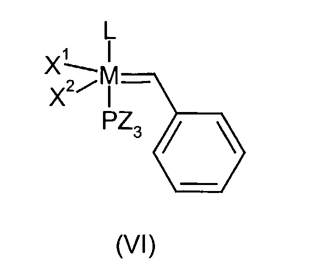 worin
L eine Bedeutung gemäß den Ansprüchen 1 bis 5 hat, und
PZ₃ für einen Phosphanliganden, insbesondere für Trimethyl-, Triethyl-, Tricyclopentyl-, Tricyclohexyl- oder Triphenylphosphan steht.
M, X¹ und X² eine Bedeutung gemäß den Ansprüchen 1 bis 5 haben, durch Liganden der Formel (VII) 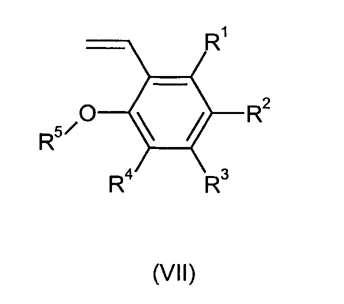
worin
R¹ bis R⁵ eine Bedeutung gemäß den Ansprüchen 1 bis 5 haben,
ausgetauscht wird.

7. Verfahren gemäß Anspruch 6, **dadurch gekennzeichnet, dass** die Umsetzung in Gegenwart von Verbindungen stattfindet, welche in der Lage sind, Phosphane abzufangen.

8. Verbindungen der Formel (VII), 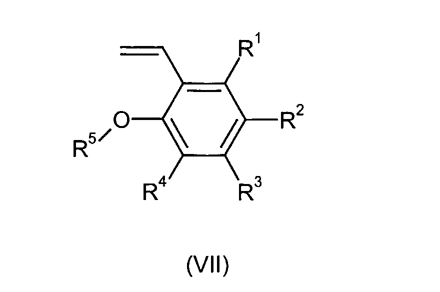 **dadurch gekennzeichnet, dass**
R¹, R³ und R⁴ für Wasserstoff stehen, und R² für Halogen, C₁-C₄-Halogenalkyl, C₁-C₄-Alkoxy, C₆-C₁₀-Aryloxy, Cyano, C₁-C₄-Alkoxycarbonyl, C₆-C₁₀-Aryloxycarbonyl oder für aliphatisches oder aromatisches C₁-C₁₀-Acyloxy steht, und
R¹, R² und R⁴ für Wasserstoff stehen, und R³ für Halogen, C₁-C₄-Halogenalkyl, C₁-C₄-Alkoxy, C₆-C₁₀-Aryloxy, Cyano, C₁-C₄-Alkoxycarbonyl, C₆-C₁₀-Aryloxycarbonyl oder für aliphatisches oder aromatisches C₁-C₁₀-Acyloxy steht, und
R⁵ für Wasserstoff oder für cyclische, geradkettige oder verzweigte Alkylreste mit 1 bis 20 Kohlenstoffatomen oder für Arylreste mit 6 bis 20 Kohlenstoffatomen steht, wobei in den genannten Resten gegebenenfalls mindestens ein Wasserstoffatom durch eine Alkylgruppe oder eine funktionelle Gruppe ersetzt ist.

9. Verfahren zur Herstellung von Verbindungen der Formel (VII) gemäß Anspruch 8, **dadurch gekennzeichnet, dass** Verbindungen der Formel (XI) 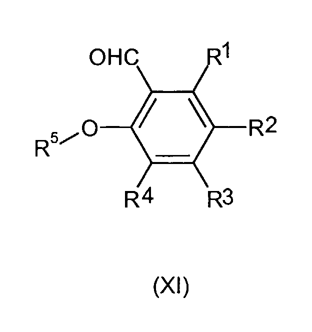 in einer Wittig-Reaktion umgesetzt werden.

10. Verwendung der Verbindungen der Formel (I) gemäß wenigstens einem der Ansprüche 1 bis 5 als Katalysatoren.

11. Verwendung der Verbindungen der Formel (I) gemäß wenigstens einem der Ansprüche 1 bis 5 als Katalysatoren in einer Metathesereaktion.

12. Verwendung der Verbindungen der Formel (VII) gemäß Anspruch 8 als Liganden zur Herstellung von Übergangsmetallkomplexen.
